(19) Europäisches Patentamt
European Patent Office
Office européen des brevets

(11) **EP 1 651 931 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **04741324.0**

(22) Anmeldetag: **29.07.2004**

(51) Int Cl.:
***G01F 1/84*** *(2006.01)*     ***G01F 25/00*** *(2006.01)*

(86) Internationale Anmeldenummer:
**PCT/EP2004/008527**

(87) Internationale Veröffentlichungsnummer:
**WO 2005/017469 (24.02.2005 Gazette 2005/08)**

(54) **MASSENDURCHFLUSSMESSGER T**

MASS FLOW METER

DEBITMETRE MASSIQUE

(84) Benannte Vertragsstaaten:
**DE FR GB**

(30) Priorität: **04.08.2003 DE 10335665**

(43) Veröffentlichungstag der Anmeldung:
**03.05.2006 Patentblatt 2006/18**

(73) Patentinhaber: **Siemens Aktiengesellschaft**
**80333 München (DE)**

(72) Erfinder: **KUMPFMÜLLER, Hans-Georg**
**76889 Gleiszellen-Gleishorbach (DE)**

(56) Entgegenhaltungen:
**EP-A- 1 281 938    DE-A- 19 620 079**
**US-A- 4 852 409    US-A- 5 069 075**
**US-A- 5 996 650    US-B1- 6 327 915**

## Beschreibung

Die Erfindung betrifft ein Massendurchflussmessgerät für strömende Medien, das nach dem Coriolis-Prinzip arbeitet, gemäß dem Oberbegriff des Anspruchs 1.

Ein derartiges Massendurchflussmessgerät für strömende Medien, das nach dem Coriolis-Prinzip arbeitet, ist beispielsweise aus der DE 196 20 079 C2 bekannt. Es werden Massendurchflussmessgeräte beschrieben, deren Coriolis-Messrohr gerade ausgeführt ist und solche mit gekrümmtem, insbesondere schleifenförmigem Coriolis-Messrohr. Außerdem wird unterschieden zwischen Massendurchflussmessgeräten, die lediglich ein Coriolis-Messrohr aufweisen und solchen mit zwei Coriolis-Messrohren. Bei den Ausführungen mit zwei Coriolis-Messrohren können diese strömungstechnisch in Reihe und parallel zueinander liegen. Bei Massendurchflussmessgeräten mit zwei geraden oder gekrümmten Messrohren sind diese meist paarweise identisch ausgeführt und so angeordnet und zum Schwingen erregt, dass sie gegeneinander schwingen. Die Lage des Massenmittelpunktes bleibt dabei konstant und auftretende Kräfte werden kompensiert. Das hat als positive Konsequenz, dass das schwingende System nicht nach außen als solches wirksam wird. In das Rohrleitungssystem, in das ein solches Massendurchflussmessgerät eingebaut ist, werden somit keine Schwingungen eingeleitet und andererseits beeinflussen Schwingungen des Rohrleitungssystems bei geeigneter Auslegung des Massendurchflussmessgeräts nicht das Messergebnis.

Bei nach dem Coriolis-Prinzip arbeitenden Massendurchflussmessgeräten, die nur ein gerades Coriolis-Messrohr aufweisen, ist diese positive Konsequenz von gegeneinander schwingenden Messrohren nicht gegeben. Der Massenmittelpunkt bleibt nicht konstant und auftretende Kräfte werden nicht kompensiert. Die Folge davon ist, dass einerseits Schwingungen in das Rohrleitungssystem, in das ein solches Massendurchflussmessgerät eingebaut ist, übertragen werden und dass andererseits Schwingungen des Rohrleitungssystems das Messergebnis beeinflussen können.

Nach dem Coriolis-Prinzip arbeitende Massendurchflussmessgeräte mit nur einem geraden Coriolis-Messrohr haben jedoch gegenüber anderen Massendurchflussmessgeräten, die zwei gerade Coriolis-Messrohre oder zumindest ein gekrümmtes Coriolis-Messrohr aufweisen, auch erhebliche Vorteile. Gegenüber den Geräten mit zwei Messrohren ist ein Vorteil vor allem darin zu sehen, dass kein Strömungsteiler und kein Strömungszusammenführer benötigt werden, die eine Reinigung des Messrohrsystems mit einem hindurchgeführten Reinigungskörper, beispielsweise einem Molch, unmöglich machen. Zudem ist ein gerades Messrohr in Bezug auf seinen mechanischen Aufbau vergleichsweise einfach und folglich mit relativ geringen Kosten herzustellen. Weiterhin sind die Innenflächen des Messrohres gut bearbeitbar, können ohne weiteres poliert werden, so dass der Druckverlust bei einem derartigen Messrohr vergleichsweise gering ist.

Üblicherweise wird bei einem Massendurchflussmessgerät mit einem geraden Messrohr an der Rohrmitte ein Schwingungserreger angeordnet, der das Messrohr mit seiner Resonanzfrequenz in Schwingung versetzt. Vor und hinter dem Schwingungserreger werden als Aufnehmer Schwingungsdetektoren angebracht, zwischen deren Signalen bei einer Strömung eine Phasendifferenz als Messsignal ausgewertet werden kann. In der Praxis liefert eine derartige Anordnung eine von Null abweichende Phasendifferenz häufig selbst dann, wenn im Messrohr keine Strömung vorhanden ist. Gründe hierfür können Einspannkräfte, unterschiedliche Temperaturbeanspruchung, Ungleichmäßigkeiten im Rohrmaterial, Phasenfehler in den Detektoren oder den zugehörigen Schaltungen einer Auswerteeinrichtung und vieles mehr sein. Es ist daher notwendig, für den ohne Strömung vorhandenen Phasenunterschied nach dem Einbau des Massendurchflussmessgeräts in eine Rohrleitung einer prozesstechnischen Anlage eine Kalibrierung vorzunehmen, um die Einflüsse derartiger Fehlerquellen korrigieren zu können. Damit die geforderte Genauigkeit auch nach längerem Betrieb erreicht wird, muss die Kalibrierung regelmäßig nachgeprüft werden.

Es wäre beispielsweise denkbar, zur manuellen Kalibrierung des Massendurchflussmessgerätes bei Nullfluss ein in derselben Rohrleitung befindliches Ventil, das zu dem Massendurchflussmessgerät in Reihe geschaltet ist, zu schließen, um gezielt einen Nullfluss einzustellen. Bei Abweichungen des durch das Massendurchflussmessgerät ausgegebenen Messwerts von Null könnten neue Kalibrierdaten zur Kompensation des Fehlers bestimmt und in einem Speicher zur Fehlerkompensation im späteren Messbetrieb hinterlegt werden. Gegebenenfalls könnten derartige Maßnahmen selbstverständlich auch bei den bereits oben beschriebenen anderen Typen von Coriolis-Massendurchflussmessgeräten durchgeführt werden. Dieses Vorgehen wäre jedoch mit einem großen Aufwand verbunden.

Der Erfindung liegt die Aufgabe zugrunde, ein Massendurchflussmessgerät für strömende Medien zu schaffen, das nach dem Coriolis-Prinzip arbeitet und sich insbesondere bei Nullfluss durch eine verbesserte Messgenauigkeit auszeichnet.

Zur Lösung dieser Aufgabe weist das neue Massendurchflussmessgerät der eingangs genannten Art die im kennzeichnenden Teil des Anspruchs 1 angegebenen Merkmale auf. In den Unteransprüchen sind vorteilhafte Weiterbildungen des Massendurchflussmessgeräts beschrieben.

Die Erfindung hat den Vorteil, dass Nullpunktverschiebungen aufgrund der oben erwähnten Effekte, die sich vorwiegend bei der Erfassung von Coriolis-Kräften und auf Coriolis-Kräften beruhender Schwingungen auf das Messergebnis auswirken, zuverlässiger erkannt und damit korrigiert werden können, da das Massendurchflussmessgerät mit Mitteln versehen ist, durch welche ein Nullfluss im Messrohr unabhängig von dieser Erfassung feststellbar ist. In vorteilhafter Weise ist es daher nicht mehr erforderlich, zur exakten Nullpunkteinstellung eines Coriolis-Durchflussmessers ein exakt ausbalanciertes Schwingungssystem zu erreichen. Insbesondere kann auf eine aufwendige Ausbalancierung des Systems durch eine zusätzliche Masse, die dazu bisher üblicherweise an das Messrohr mechanisch angekoppelt werden musste, verzichtet werden. Die verbesserte Unempfindlichkeit in Bezug auf die Ausbalancierung des Schwingungssystems hat weiterhin den Vorteil, dass ein und dasselbe Massendurchflussmessgerät für einen weiteren Bereich der spezifischen Dichte des durch das Messrohr fließenden Mediums eingesetzt werden kann. Hingegen musste bisher ein Massendurchflussmessgerät für einen bestimmten Bereich der Dichte optimiert werden. Erfolgte ein Medienwechsel, so musste das Messgerät gegen ein anderes, auf die Dichte des neuen Mediums optimiertes Messgerät ausgetauscht oder es mussten mehrere Messgeräte für jeweils unterschiedliche Bereiche der spezifischen Dichte vorgesehen werden. In vorteilhafter Weise genügt aufgrund der Beseitigung eines Messwertfehlers bei Nullfluss nun in vielen Einsatzbereichen bereits ein Messgerät zur Messung des Massendurchflusses für die verschiedenen, in Frage kommenden Medien.

Durch eine automatische Kalibrierung bei Feststellung eines Nullflusses können vorteilhaft manuelle Kalibriervorgänge vermieden werden. Als Mittel, durch welches ein Nullfluss im Messrohr unabhängig von der Erfassung von Coriolis-Kräften und auf Coriolis-Kräften beruhender Schwingungen feststellbar ist, kann vorteilhaft ein Aufnehmer zur Strömungsmessung nach dem magnetisch-induktiven Messprinzip, ein Aufnehmer zur Strömungsmessung mittels Schallsignalen nach dem Laufzeitdifferenzverfahren und/oder dem Doppler-Verfahren, ein Aufnehmer zur Strömungsmessung nach dem Differenzdruckverfahren, nach einem kalorimetrischen Verfahren und/oder nach einem Schwebekörperverfahren verwendet werden. Alle Aufnehmer besitzen den Vorteil, dass sie mit vergleichsweise geringem Aufwand herstellbar sind, da bei derartigen Aufnehmern zur Feststellung des Nullflusses bereits vergleichsweise einfache Mittel genügen. So ist es beispielsweise bei einem Aufnehmer zur Strömungsmessung nach dem magnetisch-induktiven Messprinzip bereits ausreichend, ein Verschwinden der Elektrodenspannung zu überwachen. Bei Verwendung eines Aufnehmers zur Strömungsmessung mittels Schallsignalen nach dem Laufzeitdifferenzverfahren werden üblicherweise auf einander gegenüberliegenden Seiten der Rohrwandung axial zueinander versetzt zwei Schallwandler angeordnet, die abwechselnd als Ultraschallsender und Ultraschallempfänger betrieben werden. Dabei wird die Laufzeit der Schallwelle stromauf und stromab gemessen und aus den Laufzeiten die Differenz berechnet. Aufgrund des Reziprozitäts-Prinzips werden hierbei Nullpunktabweichungen unterdrückt und es wird somit eine exakte Feststellung des Nullflusses erreicht. Da der Aufnehmer lediglich zur Feststellung des Nullflusses verwendet wird und nicht zur quantitativen Messung eines Durchflusses, hat eine Abhängigkeit der Messung vom Strömungsprofil keine Bedeutung und es kann ein vergleichsweise aufwandsarmer Aufnehmer eingesetzt werden.

Besonders vorteilhaft ist die Erfindung bei einem Massendurchflussmessgerät mit geradem Coriolis-Messrohr, da hier die Nullflussmessung nach dem Coriolis-Prinzip, wie bereits oben geschildert, besonders problematisch ist.

Eine Anordnung des zusätzlichen Aufnehmers im Bereich des Messrohranfangs und/oder des Messrohrendes hat den Vorteil, dass die Amplituden der Schwingungen hier besonders gering sind und die Messung des Durchflusses nach dem Coriolis-Prinzip folglich besonders wenig durch die zusätzliche Masse des Aufnehmers beeinflusst wird.

Die Erfindung ist mit besonders geringem Aufwand realisierbar, wenn zur Aufbereitung und Auswertung eines durch den zusätzlichen Aufnehmer gelieferten Signals die Auswerteeinrichtung verwendet wird, die ohnehin zur Durchführung der Messung des Massendurchflusses nach dem Coriolis-Prinzip vorhanden ist.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1     ein Blockschaltbild eines Massendurchflussmessgeräts und

Figur 2     ein Diagramm zur Erläuterung von Kalibrierdaten.

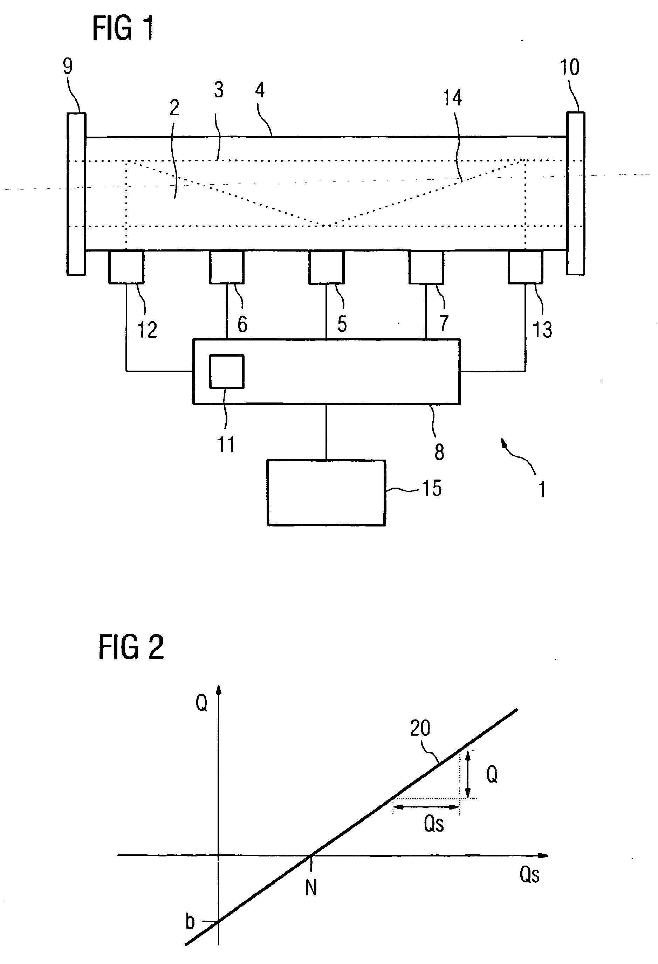

Ein Massendurchflussmessgerät 1 gemäß Figur 1 arbeitet nach dem Coriolis-Prinzip. Der Übersichtlichkeit wegen wurde ein Gehäuse, das üblicherweise aber nicht zwingend vorhanden ist, in der Zeichnung nicht dargestellt. Ein fließfähiges Medium 2 strömt durch einen Kanal 3 eines in dem gezeigten Ausführungsbeispiel geraden Messrohrs 4, auf welches ein Schwingungserzeuger 5 derart einwirkt, dass das Messrohr 4 zu Schwingungen in einer senkrecht zur Rohrachse verlaufenden Richtung angeregt wird. Ein Aufnehmer 6 und ein Aufnehmer 7 dienen zur Erfassung der Coriolis-Kräfte und/oder der auf den Coriolis-Kräften beruhenden Schwingungen des Messrohrs 4, die aufgrund der Masse des durchströmenden Mediums 2 entstehen. In der Regel werden dazu wie im hier gezeigten Ausführungsbeispiel zwei Aufnehmer verwendet und die Phasenverschiebung zwischen den aufgenommenen Schwingungen als Messsignal in einer Auswerteeinrichtung 8 ausgewertet, welche auch den Schwingungserzeuger 5 ansteuert. Abweichend von dem gezeigten Ausführungsbeispiel kann das Messrohr selbstverständlich andere Geometrien aufweisen, beispielsweise eine gekrümmte Messrohrachse besitzen, oder es kann eine abweichende Anzahl und Anordnung von Schwingungserregern und Schwingungsaufnehmern gewählt werden. Dabei besteht jedoch immer das bereits eingangs erwähnte Problem von Massendurchflussmessgeräten, die nach dem Coriolis-Prinzip arbeiten, dass sich im Betrieb der Nullpunkt, d. h. der Pegel des Messsignals, bei welchem keine Strömung im Messrohr 4 vorhanden ist und folglich ein Messwert "0" auszugeben ist, verschiebt. Ursachen hierfür können beispielsweise veränderliche Einspannkräfte, die bei Einbau des Messgeräts mit Hilfe zweier Flansche 9 und 10 in eine bestehende Rohrleitung einer prozesstechnischen Anlage in das Messrohr 4 eingekoppelt werden, schwankende Temperaturbeanspruchung usw. sein. Die Lage des Nullpunkts wird durch die Auswerteeinrichtung anhand von Kalibrierdaten berücksichtigt, die in einem Speicher 11 in der Auswerteeinrichtung hinterlegt sind. Anhand der abgespeicherten Kalibrierdaten ermittelt die Auswerteeinrichtung 8 in Abhängigkeit des Messsignals einen Messwert, der auf einer Anzeige 15 ausgegeben oder über einen in den Figuren nicht dargestellten Feldbus an eine übergeordnete Leitstation übertragen wird. Von Zeit zu Zeit ist also eine Neukalibrierung erforderlich, in welcher neue Kalibrierdaten zur Beseitigung eines Messfehlers bestimmt und im Speicher 11 zur Berücksichtigung bei zukünftigen Messungen abgelegt werden. Damit das Massendurchflussmessgerät 1 bei Nullfluss kalibriert werden kann, muss zunächst dieser zuverlässig und mit hoher Genauigkeit festgestellt werden. Dazu dienen im gezeigten Ausführungsbeispiel zwei zusätzliche Aufnehmer 12 und 13, die wechselweise als Ultraschallsender und -empfänger betreibbar sind. Bei Betrieb der Ultraschallmessstrecke durchläuft ein Ultraschallsignal das Medium 2 entlang einer im Wesentlichen M-förmigen Messstrecke 14. In beiden Laufrichtungen werden die Laufzeiten gemessen und die Laufzeitdifferenz berechnet. Die Ansteuerung der Aufnehmer 12 und 13 und die Auswertung der durch diese gelieferten Signale erfolgt durch die Auswerteeinrichtung 8. Aufgrund des bei dem gewählten Ultraschallmessverfahren gültigen Reziprozitäts-Prinzips wird insbesondere bei der Nullflussmessung eine vergleichsweise hohe Genauigkeit erreicht.

Die beiden zusätzlichen Aufnehmer 12 und 13 sind im Randbereich des Messrohrs 4 in der Nähe der Flansche 9 und 10 angeordnet, damit sie möglichst geringen Schwingungen ausgesetzt sind und das Schwingungsverhalten des Messrohrs 4 bei den Durchflussmessungen nach dem Coriolis-Prinzip praktisch nicht beeinflussen.

Das Prinzip der Berechnung neuer Kalibrierdaten wird im Folgenden anhand Figur 2 erläutert, in der eine Gerade 20 für das Beispiel einer linearen Abhängigkeit zwischen einem Messsignal Qs, das in Abhängigkeit von Coriolis-Kräften und/oder auf Coriolis-Kräften beruhender Schwingungen erzeugt wird, und einem in der Auswerteeinrichtung 8 (Figur 1) anhand der abgespeicherten Kalibrierdaten ermittelten Messwert Q in ein Diagramm eingezeichnet ist. Auf der Abszisse ist das Messsignal Qs, auf der Ordinate der Messwert Q aufgetragen.

Die Abhängigkeit des Messwerts Q vom Messsignal Qs lässt sich durch eine Gleichung

$$Q = a \cdot Qs + b$$

beschreiben mit einer Steigung a und einem Versatz b als Parameter, die als Kalibrierdaten abgespeichert werden. Die Steigung a kann berechnet werden als eine Änderung $\Delta Q$ des Messwerts Q, die bei einer Änderung $\Delta Qs$ des Messsignals Qs auszugeben ist. Die Bestimmung der Steigung a kann auf herkömmliche Art erfolgen und ist nicht Gegenstand der vorliegenden Anmeldung. Auf der Abszisse ist ein Nullpunkt N abgetragen, welcher angibt, um welchen Betrag ein mit Hilfe der Aufnehmer 6 und 7 nach dem Coriolis-Prinzip erzeugtes Messsignal Qs bei Nullfluss vom idealen Wert Qs = 0 abweicht. Mit Kenntnis der Steigung a der Geraden 20, die im Wesentlichen von der Geometrie und der Steifigkeit des Messsystems abhängig ist und sich damit über die Dauer des Betriebs kaum verändert, kann bei einer Veränderung des Nullpunkts N in einfacher Weise eine Neuberechnung der Kalibrierdaten vorgenommen werden, sobald durch die zusätzlichen Aufnehmer 12 und 13 (Figur 1) ein Nullfluss festgestellt wurde. Der neue Versatz b wird berechnet als das negative Produkt aus der Steigung a und dem neu ermittelten Nullpunkt N und wird zur Fehlerkompensation bei zukünftigen Messungen im Speicher 11 hinterlegt. Gleichzeitig kann mit der Feststellung eines Nullflusses der Messwert "0" durch das Massendurchflussmessgerät ausgegeben werden.

In dem beschriebenen Ausführungsbeispiel gemäß Figur 1 werden zwei Aufnehmer 12 und 13 zur Nullpunktfeststellung verwendet. Abweichend davon sind selbstverständlich Ausführungen möglich, die mit lediglich einem Aufnehmer auskommen. Dies ist beispielsweise der Fall, wenn zur Feststellung eines Nullflusses ein Aufnehmer zur Strömungsmessung nach dem magnetisch-induktiven Messprinzip, nach einem kalorimetrischen Verfahren oder nach einem Schwebekörperverfahren eingesetzt wird. Dann würde beispielsweise der Aufnehmer 13 in Figur 1 entfallen. Bei Verwendung eines Aufnehmers nach dem Differenzdruckverfahren ist dagegen die Verwendung zweier Druckaufnehmer als Aufnehmer 12 und 13 vorteilhaft. Bei einer Alternative mit einem Aufnehmer zur Strömungsmessung mittels Schallsignalen nach dem Doppler-Prinzip ist prinzipiell ebenfalls lediglich ein zusätzlicher Aufnehmer neben den zur Coriolis-Messung benutzten Aufnehmern erforderlich.

## Patentansprüche

1. Massendurchflussmessgerät für strömende Medien, das nach dem Coriolis-Prinzip arbeitet,

   - mit einem Coriolis-Messrohr (4),
   - mit mindestens einem auf das Coriolis-Messrohr (4) einwirkenden Schwingungserzeuger (5),
   - mit mindestens einem Coriolis-Kräfte und/oder auf Coriolis-Kräften beruhende Schwingungen erfassenden Aufnehmer (6, 7) zur Erzeugung eines Messsignals und
   - mit einer Auswerteeinrichtung (8), durch welche in Abhängigkeit des Messsignals ein Messwert des Durchflusses ermittel- und ausgebbar ist,

   **dadurch gekennzeichnet,**

   - **dass** mindestens ein zusätzlicher Aufnehmer zur Strömungsmessung nach dem magnetisch-induktiven Messprinzip und/oder zur Strömungsmessung mittels Schallsignalen nach dem Laufzeitdifferenzverfahren und/oder dem Doppler-Verfahren und/oder zur Strömungsmessung nach dem Differenzdruckverfahren und/oder zur Strömungsmessung nach dem kalorimetrischen Verfahren und/oder zur Strömungsmessung nach dem Schwebekörperverfahren vorgesehen ist, durch welchen ein Nullfluss im Messrohr (4) unabhängig von der Erfassung von Coriolis-Kräften und auf Coriolis-Kräften beruhender Schwingungen feststellbar und ein entsprechendes zusätzliches Messsignal erzeugbar ist,
   - und **dass** der Messwert des Durchflusses durch die Auswerteeinrichtung zumindest im Bereich des Nullflusses in Abhängigkeit des zusätzlichen Messsignals ermittel- und ausgebbar ist.

2. Massendurchflussmessgerät nach Anspruch 1, **dadurch gekennzeichnet,**

   - **dass** die Auswerteeinrichtung (8) derart ausgebildet ist, dass der Messwert des Durchflusses anhand abgespeicherter Kalibrierdaten in Abhängigkeit des Messsignals ermittel- und ausgebbar ist, und
   - **dass** bei Feststellung eines Nullflusses Kalibrierdaten zur Kalibrierung des Massendurchflussmessgeräts bestimm- und abspeicherbar sind.

3. Massendurchflussmessgerät nach Anspruch 1 oder 2, **dadurch gekennzeichnet,**

   - **dass** das Coriolis-Messrohr (4) gerade ist.

4. Massendurchflussmessgerät nach einem der vorhergehenden Ansprüche, **dadurch gekennzeichnet,**

   - **dass** der zusätzliche Aufnehmer (12, 13) im Bereich des Messrohranfangs und/oder des Messrohrendes angeordnet ist.

## Claims

1. Mass flowmeter for flowing media, which operates according to the Coriolis principle,

   - having a Coriolis measuring tube (4),
   - having at least one vibration generator (5) which acts on the Coriolis measuring tube (4),
   - having at least one sensor (6, 7) which captures Coriolis forces and/or vibrations based on Coriolis forces and is intended to generate a measurement signal, and
   - having an evaluation device (8) which can be used to determine and output a measured value of the flow rate on the basis of the measurement signal,

   **characterized**

   - **in that** at least one additional sensor is provided for measuring the flow according to the magnetoinductive measurement principle and/or for measuring the flow using sound signals according to the propagation time difference method and/or the Doppler method and/or for measuring the flow according to the differential pressure method and/or for measuring the flow according to the calorimetric method and/or for measuring the flow according to the float method, which additional sensor can be used to determine a zero flow in the measuring tube (4) independently of the capture of Coriolis forces and vibrations based on Coriolis forces and can be used to generate a corresponding additional measurement signal,
   - and **in that** the measured value of the flow rate can be determined and output by the evaluation device at least in the region of the zero flow on the basis of the additional measurement signal.

2. Mass flowmeter according to Claim 1, **characterized**

   - **in that** the evaluation device (8) is designed such that the measured value of the flow rate can be determined and output using stored calibration data on the basis of the measurement signal, and

- **in that** calibration data for calibrating the mass flowmeter can be determined and stored when a zero flow is determined.

3. Mass flowmeter according to Claim 1 or 2, **characterized**

   - **in that** the Coriolis measuring tube (4) is straight.

4. Mass flowmeter according to one of the preceding claims, **characterized**

   - **in that** the additional sensor (12, 13) is arranged in the region of the start of the measuring tube and/or the end of the measuring tube.


**Revendications**

1. Débitmètre massique pour des fluides en écoulement, qui fonctionne selon le principe de Coriolis,

   - comprenant un tube ( 4 ) de mesure de Coriolis,
   - comprenant au moins un générateur ( 5 ) d'oscillations agissant sur le tube ( 4 ) de mesure de Coriolis,
   - comprenant au moins un capteur ( 6, 7 ) détectant des forces de Coriolis et/ou des oscillations reposant sur des forces de Coriolis pour la production d'un signal de mesure et
   - comprenant un dispositif ( 8 ) d'exploitation, par lequel une valeur de mesure du débit peut être déterminée et être émise en fonction du signal de mesure,

   **caractérisé**

   - **en ce qu'**il est prévu au moins un capteur supplémentaire de mesure du courant suivant le principe de mesure par induction magnétique et/ou de mesure du courant au moyen de signaux acoustiques suivant le procédé de différence de temps de parcours et/ou suivant le procédé Doppler et/ou de mesure du courant suivant le procédé de différence de pression et/ou de mesure du courant suivant le procédé calorimétrique et/ou de mesure du courant suivant le procédé du corps en suspension, par lesquels il peut être constaté un débit nul dans le tube ( 4 ) de mesure indépendamment de la détection de forces de Coriolis et d'oscillations reposant sur des forces de Coriolis et être produit un signal de mesure supplémentaire correspondant,
   - et **en ce que** la valeur de mesure du débit peut être déterminée et être émise par le dispositif d'exploitation au moins dans la plage du débit nul en fonction du signal de mesure supplémentaire.

2. Débitmètre massique suivant la revendication 1, **caractérisé**

   - **en ce que** le dispositif ( 8 ) d'exploitation est tel que la valeur de mesure du débit peut être déterminée et émise en fonction du signal de mesure au moyen de données d'étalonnage numérisées, et
   - **en ce que**, lorsque l'on constate un débit nul, des données d'étalonnage pour l'étalonnage du débitmètre massique peuvent être déterminées et mémorisées.

3. Débitmètre massique suivant la revendication 1 ou 2, **caractérisé**

   - **en ce que** le tube ( 4 ) de mesure de Coriolis est rectiligne.

4. Débitmètre massique suivant l'une des revendications précédentes, **caractérisé**

   - **en ce que** le capteur ( 12, 13 ) supplémentaire est monté dans la partie du début du tube de mesure et/ou de la fin du tube de mesure.

## FIG 1

## FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19620079 C2